## Europäisches Patentamt
## European Patent Office
## Office européen des brevets

(19)

(11) Numéro de publication : **0 279 731 B1**

(12) # FASCICULE DE BREVET EUROPEEN

(45) Date de publication du fascicule du brevet :
**29.05.91 Bulletin 91/22**

(51) Int. Cl.$^5$ : **G01V 3/10**

(21) Numéro de dépôt : **88400264.3**

(22) Date de dépôt : **05.02.88**

(54) **Procédé de contrôle d'objets métalliques dans un matériau non métallique, notamment de fers d'armature de béton armé.**

(30) Priorité : **05.02.87 FR 8701427**

(43) Date de publication de la demande :
**24.08.88 Bulletin 88/34**

(45) Mention de la délivrance du brevet :
**29.05.91 Bulletin 91/22**

(84) Etats contractants désignés :
**AT BE CH DE ES GB GR IT LI LU NL SE**

(56) Documents cités :
**US-A- 2 874 349
US-A- 2 883 538
US-A- 3 473 110
INSTRUMENTS AND CONTROL SYSTEMS,
vol. 54, no. 10, octobre 1981, pages 49-52,
Radnor, Pennsylvanie, US; P. GARLEWSKY et
al.: "A guide to inductive proximity switches"
FUNKSCHAU, vol. 47, no. 8, 1975, pages
131-132, Munich, DE; W. BOHN: "Ein einfaches Metallsuchgerät**

(73) Titulaire : **CENTRE D'ETUDES ET DE
RECHERCHES DE L'INDUSTRIE DU BETON
MANUFACTURE
B. P. 59
F-28230 Epernon (FR)**

(72) Inventeur : **Teyssier, Jean-Christophe
Logement No. 1 Rue Georges Brassens
F-28000 Chartres (FR)**
Inventeur : **Rogerie, Jean-Yves
21, rue du Faubourg la Grappe
F-28000 Chartres (FR)**
Inventeur : **Faucon, Philippe
7, rue des Ormes Dancourt
F-28210 Nogent le Roi (FR)**

(74) Mandataire : **Levesque, Denys et al
Cabinet Beau de Loménie 55, rue
d'Amsterdam
F-75008 Paris (FR)**

## Description

La présente invention se rapporte à un procédé de contrôle de la présence et de la profondeur d'un objet métallique au sein d'un bloc de matériau non métallique, notamment d'un fer d'armature dans une pièce de béton armé.

D'une manière traditionnelle, le contrôle de positionnement des objets métalliques enrobés est réalisé par sondages destructifs, ce qui présente des inconvénients évidents.

Parfois est utilisé un appareil non destructif qui compare, grâce à un galvanomètre spécialement étalonné, les forces électromagnétiques d'un transformateur de référence à celles d'un transformateur formé par une sonde et l'objet métallique à détecter ; la déviation de l'aiguille du galvanomètre, qui est fonction de la distance des pôles de la sonde à l'objet, permet d'apprécier l'épaisseur de recouvrement de l'objet métallique.

Ce type d'appareil non destructif est capable de fournir des résultats de bonne précision. Toutefois, sa mise en oeuvre est délicate et la validité des résultats repose sur le savoir-faire du manipulateur.

La présente invention a pour but de définir un procédé de contrôle qui soit simple, fiable, de mise en oeuvre facile et qui permette, pour un coût modique, la mesure de l'épaisseur de recouvrement d'objets métalliques dans une large plage de cette épaisseur et pour des objets métalliques de grosseur très diverse.

Selon ce procédé, on utilise un détecteur de proximité sensible à la présence d'un objet métallique, qui fournit un signal de sortie prenant deux états distincts suivant que ledit objet se trouve au delà ou en deçà d'une distance déterminée, cette distance étant ajustable à l'aide d'un organe de réglage de la sensibilité du détecteur. Un détecteur de ce genre est connu par le brevet américain n° 3 473 110, qui décrit un détecteur muni d'une sonde associée à un oscillateur. Lorsque la sonde approche d'une pièce métallique jusqu'à une distance de détection réglable, le signal de sortie de ce dernier subit une variation qui commande par tout ou rien un dispositif indicateur.

Après avoir étalonné la distance de détection en fonction de la grosseur des objets métalliques, notamment du diamètre des fers d'armature, à contrôler, on règle la distance limite de détection du détecteur à une valeur nettement plus grande que la profondeur normale de l'objet métallique dans le bloc de matériau, on applique le détecteur à la surface de ce dernier puis, après détection de l'objet métallique, on l'éloigne de ladite surface jusqu'à ce que son signal de sortie change d'état ; on mesure alors la distance d'éloignement du détecteur et on en déduit, compte tenu de la grosseur de l'objet métallique, la profondeur de ce dernier.

Le détecteur de proximité utilisé peut être l'un de ces modèles industriels courants du type inductif, conçus pour servir de dispositifs de fin de course, de détecteurs de position ou de générateurs d'impulsions en association avec une roue phonique. De tels détecteurs, peu coûteux et fonctionnant par tout ou rien, ne sont nullement destinés à servir d'appareils de mesure pour fournir des résultats quantitatifs. Toutefois, ils permettent maintenant, grâce au procédé selon l'invention, non seulement de déceler la présence d'un objet métallique noyé dans un matériau, mais d'en mesurer la profondeur au sein de ce dernier, et cela de manière très simple, aisément accessible à tout opérateur, même non expérimenté. Le procédé est en particulier bien adapté au contrôle des fers d'armature dans des pièces de béton armé manufacturées, c'est-à-dire à la vérification de la présence de ces fers aux endroits où ils doivent se trouver dans chaque pièce de béton armé ainsi que de l'épaisseur de béton recouvrant chacun de ces fers d'armature.

D'autres caractéristiques et avantages de l'invention ressortiront plus clairement de la description qui va suivre, en regard des dessins annexés, d'exemples de réalisation non limitatifs.

La figure 1 illustre schématiquement l'utilisation d'un détecteur de proximité au contrôle d'un fer d'armature d'une pièce de béton manufacturée, dans quatre cas pratiques différents.

La figure 2 est un réseau de courbes d'étalonnage du détecteur de proximité utilisé.

Les figures 3 et 4 montrent comment répond le détecteur à la présence d'un fer d'armature, dans trois cas différents, respectivement pour un premier et un second réglage de sa sensibilité.

Les figures 5 et 6 illustrent l'utilisation d'une paire de deux détecteurs associés.

Les figures 7A et 7B illustrent le procédé de détection selon l'invention.

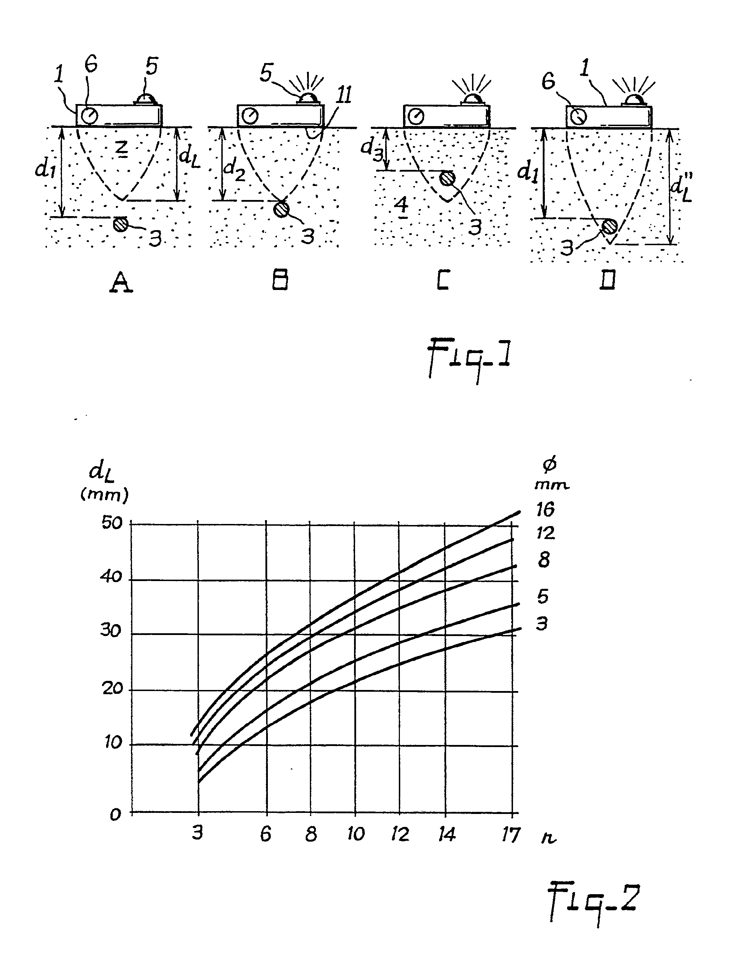

On voit, schématisé sur la figure 1, un détecteur de proximité 1 mis en oeuvre, dans le présent exemple, pour contrôler la présence et la position d'un fer rond d'armature 3 faisant partie de l'armature d'une pièce 4 de béton armé. Ce détecteur comprend, logé dans un boîtier, un circuit oscillant LC qui, associé à un oscillateur, crée un champ électromagnétique local, lequel détermine la zone active Z du détecteur, de forme sensiblement conique et émanant d'une face 11 du boîtier. Tout élément métallique pénétrant dans cette zone Z est le siège, en raison d'un phénomène d'induction, de courants de Foucault qui entraînent un amortissement du circuit oscillant, lequel est constaté par un étage de commutation électronique. Ainsi, le signal de sortie du détecteur, fourni par cet étage de commutation, peut prendre deux états différents suivant qu'un objet métallique est présent ou absent de la zone active Z.

Le détecteur 1 est équipé d'un indicateur visuel 5 et d'un bouton 6 de réglage de la sensibilité. L'indicateur 5, auquel est appliqué le signal de sortie de l'étage de commutation électronique, s'allume ou s'éteint suivant que le fer rond 3, en regard duquel se trouve le détecteur 1, est situé à une distance inférieure ou supérieure à la distance limite de détection $d_L$ du détecteur, définie par l'étendue de la zone active Z, cette distance limite étant réglable par manoeuvre du bouton 6. A la place ou en plus de l'indicateur visuel 5, on pourrait également utiliser un indicateur sonore tel qu'un vibreur.

Le détecteur 1 étant appliqué par la face 11 de son boîtier sur la surface 41 de la pièce de béton, plusieurs cas peuvent se présenter (figure 1). Dans le cas A, le fer rond 3 est situé à une distance $d_1$ supérieure à la distance limite $d_L$ du détecteur 1, et l'indicateur 5 de celui-ci reste éteint. Dans le cas B, la distance $d_2$ du fer 3 est égale à la distance $d_L$ et l'indicateur 5 s'allume. Il en va évidemment de même si le fer 3 est à une distance $d_3$ inférieure à la distance $d_L$ (cas C). Le cas D montre que le fer 3 du cas A peut être détecté en réglant, au moyen du bouton 6, la distance limite de détection à une valeur $d''_L \geqq d_1$ (qui correspond à une zone active plus allongée).

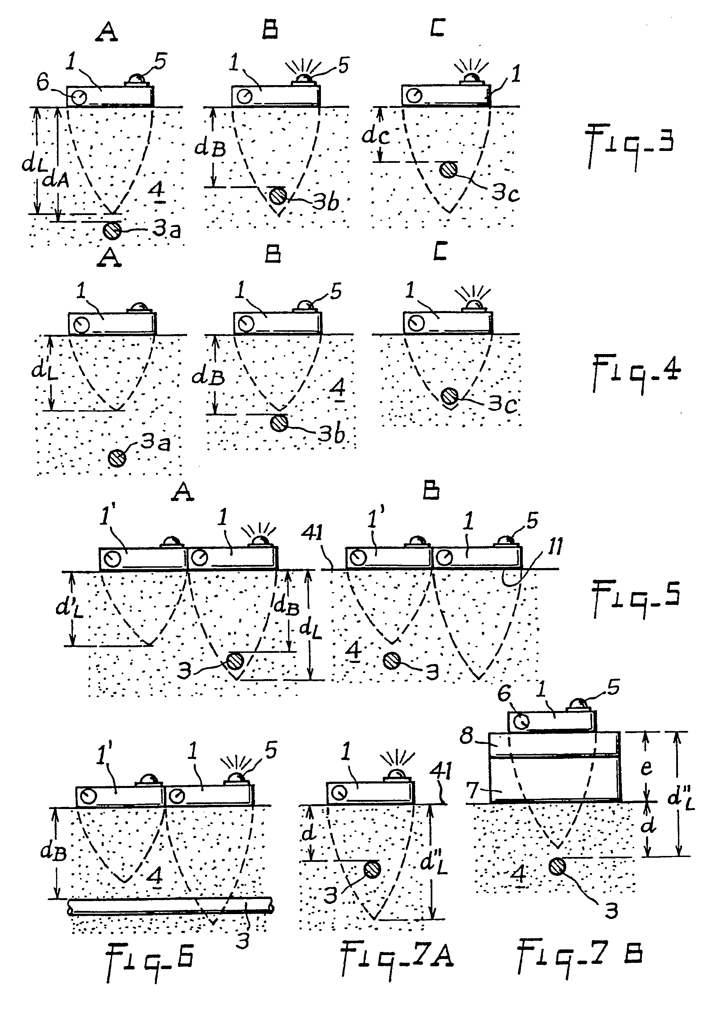

Préalablement à son application au contrôle de la présence et de la profondeur d'un fer rond 3 dans une pièce de béton 4, on procède à l'étalonnage du détecteur 1. Sa sensibilité dépendant non seulement de la position du bouton de réglage 6, mais aussi du diamètre du fer rond 3 à détecter. C'est pourquoi on dresse un abaque tel que celui de la figure 2, qui donne la distance limite de détection $d_L$ en fonction de la position de réglage du bouton 6 (celui-ci étant, dans l'exemple décrit, couplé à un potentiomètre à plusieurs tours, c'est le nombre n de tours donnés au bouton 6 qui est porté en abscisses), avec pour paramètre le diamètre du fer rond 3. Cet abaque, établi expérimentalement, permet de déterminer le réglage à effectuer sur le détecteur 1 pour lui conférer telle distance limite de détection $d_L$ désirée en présence d'un fer rond de tel diamètre donné. Par exemple, si l'on désire une distance limite de 25 mm en présence d'un fer rond de diamètre égal à 5 mm, on voit qu'il faut donner 10 tours au bouton de réglage 6.

Le détecteur 1 étant réglé pour une distance limite $d_L$ déterminée, compte tenu du diamètre des fers ronds à contrôler, il ressort des trois cas A, B et C montrés à la figure 3 que le détecteur ainsi réglé, appliqué à la surface 41 du béton 4, décèle la présence des fers ronds 3b et 3c dont les distances respectives $d_B$ et $d_C$ à la surface 41 du béton 4 est inférieure à la distance limite $d_L$, tandis que, dans le cas A, il ne détecte rien, le fer 3a étant situé plus profondément dans le béton, à une distance $d_A$ de la surface de celui-ci supérieure à la distance limite $d_L$.

La figure 4 illustre les mêmes opérations de détection, effectuées sur les mêmes fers 3a, b, c après réglage de la distance limite du détecteur 1 à une nouvelle valeur $d'_L$ inférieure à $d_L$ et comprise entre $d_B$ et $d_C$. Dans ce cas, seul le fer 3c du cas C est détecté.

Ainsi, il est possible, à l'aide du détecteur 1, de vérifier la présence de fers ronds 3 par trop éloignés de la surface du béton 4 où ils sont noyés, ces fers pouvant être décelés, si leur position est inconnue, par balayage du détecteur 1 à la surface 41 du béton. On peut au surplus vérifier la profondeur de ces fers, c'est-à-dire l'épaisseur de béton qui les recouvre. Dans l'exemple des figures 3 et 4, on vérifie que la profondeur $d_B$ du fer rond 3b est égale à la valeur correcte $d_t$ grâce à une double application du détecteur 1 réglé pour des distances limites successives $d_L$ et $d'_L$ encadrant la valeur $d_t$. C'est en effet le seul des trois fers 3a, b, c qui soit détecté pour le réglage $d_L > d_t$ et ne le soit pas pour le réglage $d'_L < d_t$.

Ces mêmes opérations peuvent être réalisées plus commodément en associant au détecteur 1, réglé à la distance limite $d_L$, un second détecteur 1' identique, mais réglé à la distance limite $d'_L$. Un fer 3 situé à une profondeur $d_B$ égale à la valeur correcte $d_t$ excite l'indicateur 5 du détecteur 1 (cas A), mais non celui du détecteur 1' (cas B). Les deux détecteurs 1, 1' peuvent avantageusement être appliqués sur la surface 41 du béton 4 avec une orientation telle qu'ils soient simultanément en regard du fer rond 3 à contrôler (figure 6). Un fer 3 de profondeur incorrecte exciterait soit les deux détecteurs 1, 1', soit aucun d'eux.

Conformément aux figures 7A et 7B, on peut utiliser un seul détecteur 1 réglé à une distance limite de détection $d''_L$ nettement plus grande que la profondeur d d'un fer rond 3. Posé sur le béton 4 en regard de ce dernier, il en décèle la présence (figure 7A). Si alors on l'écarte du béton, son indicateur 5 s'éteint lorsque la distance du détecteur 1 au fer 3 atteint la valeur $d''_L$ (figure 7B). En mesurant l'espacement e du détecteur par rapport à la surface du béton, par exemple à l'aide de cales 7, 8 d'épaisseur connue, successivement interposées jusqu'à extinction de l'indicateur 5, on obtient la valeur de la profondeur d du fer 3 :

$$d = d''_L - e$$

et l'on peut vérifier si cette profondeur est correcte.

## Revendications

1. Procédé de contrôle de la présence et de la profondeur d'un objet métallique au sein d'un bloc de matériau non métallique, notamment d'un fer d'armature dans une pièce de béton armé, au moyen d'un détecteur de proximité (1) sensible à la présence d'un objet métallique (3), qui fournit un signal de sortie prenant deux états distincts suivant que ledit objet se trouve au delà ou en deçà d'une distance déterminée, cette distance de détection ($d_L$) étant ajustable à l'aide d'un organe (6) de réglage de la sensibilité du détecteur,
caractérisé par le fait que, après avoir étalonné ladite distance de détection en fonction de la grosseur des objets métalliques – notamment du diamètre des fers d'armature – à contrôler, on règle la distance de détection ($d_L$) du détecteur (1) à une valeur ($d''_L$) nettement plus grande que la profondeur normale ($d_t$) de l'objet métallique (3) dans le bloc de matériau (4), on applique le détecteur (1) à la surface (41) de ce dernier puis, après détection de l'objet métallique, on l'éloigne de ladite surface jusqu'à ce que son signal de sortie change d'état, on mesure alors la distance (e) d'éloignement du détecteur et on en déduit, compte tenu de la grosseur de l'objet métallique (3), la profondeur de ce dernier.

2. Procédé selon la revendication 1, caractérisé par le fait qu'on mesure la distance (e) séparant le détecteur (1) et ladite surface (41) par interposition de cales (7, 8) d'épaisseur connue.

3. Procédé selon la revendication 1 ou 2, caractérisé par le fait que le détecteur utilisé est du type inductif.

**Ansprüche**

1. Verfahren zur Prüfung der Anwesenheit und Tiefe eines metallischen Objektes im Inneren eines Blocks aus nicht metallischem Material, insbesondere eines Bewehreisens in einem Stück Stahlbeton, bei dem ein auf die Anwesenheit eines metallischen Objektes (3) ansprechender Annäherungsdetektor (1) verwendet wird, der ein Ausgangssignal liefert, das zwei unterschiedliche Zustände annehmen kann, je nachdem ob das Objekt sich innerhalb oder ausserhalb einer vorbestimmten Entfernung befindet, wobei diese Erkennungsentfernung ($d_L$) mit Hilfe eines Regelorgans (6) für die Sensibilität des Detektors einstellbar ist, dadurch gekennzeichnet, dass man, nachdem die genannte Erkennungsentfernung in Abhängigkeit der Stärke der zu prüfenden metallischen Objekte – insbesondere des Durchmessers der Bewehreisen – geeicht wurde, die Erkennungsentfernung ($d_L$) des Detektors (1) auf einen Wert ($d''_L$) einstellt, der deutlich grösser ist als die normale Tiefe ($d_t$) des metallischen Objekts (3) im Materialblock (4), man den Detektor (1) an die Oberfläche (41) des letzteren anlegt, ihn dann, nach Feststellung eines metallischen Objekts, von der genannten Oberfläche wegbewegt, bis sein Ausgangssignal den Zustand wechselt, man daraufhin die Entfernung (e) misst, mit der der Detektors wegbewegt wurde, und davon, unter Berücksichtigung der Stärke des metallischen Objekts (3), die Tiefe des letzteren ableitet.

2. Verfahren nach Anspruch 1, dadurch gekennzeichnet, dass man die Entfernung (e) zwischen dem Detektor (1) und der Oberfläche (41) durch Einschieben von Schuhen (7, 8) bekannter Dicke misst.

3. Verfahren nach Anspruch 1 oder 2, dadurch gekennzeichnet, dass der verwendete Detektor induktiv arbeitet.

**Claims**

1. Method of testing for the presence and depth of a metallic object within a block of non-metallic material, in particular a reinforcing iron rod in a piece of reinforced concrete, using a proximity detector (1) sensitive to the presence of a metallic object (3), which supplies an output signal which assumes two distinct states according to whether said object is situated beyond or within a given distance, this detection distance ($d_L$) being adjustable with the help of a device (6) for adjusting the sensitivity of the detector, characterised in that, after said detection distance has been calibrated in response to the size of the metallic objects to be tested for – in particular the diameter of the reinforcing iron rods – the detection distance ($d_L$) of the detector (1) is adjusted to a value ($d''_L$) markedly greater than the normal depth ($d_t$) of the metallic object (3) in the block of material (4), the detector (1) is applied to the surface (41) of said material and then, after detection of the metallic object, moved away from said surface until its output signal changes state, whereupon the distance (e) by which the detector has been moved away is measured and the depth of the metallic object (3) is deduced, taking into account the size thereof.

2. Method according to claim 1, characterised in that the distance (e) separating the detector (1) and said surface (41) is measured by interposing shims (7, 8) of known thickness.

3. Method according to claim 1 or 2, characterised in that the detector employed is of the inductive type.

Fig-1

Fig-2

Fig-3

Fig-4

Fig-5

Fig-6

Fig-7A

Fig-7B